# FASCICULE DE BREVET EUROPEEN

(11) **EP 4 064 875 B1**
(45) Date de publication et mention de la délivrance du brevet: **04.12.2024**
(21) Numéro de dépôt: 20811661.6
(22) Date de dépôt: 27.11.2020
(51) Int. Cl.: A24C 5/00, A24D 1/02

(54) **PAPIER POUR CIGARETTE À ROULER COMPRENANT UNE BANDE ADHÉSIVE DE FAIBLE GRAMMAGE**
RYO-ZIGARETTENPAPIER MIT EINEM KLEBESTREIFEN MIT EINEM GERINGEN FLÄCHENGEWICHT
RYO-CIGARETTE PAPER INCLUDING A LOW GRAMMAGE ADHESIVE STRIP

(30) Priorité: 28.11.2019 FR 1913406
(43) Date de publication de la demande: 05.10.2022
(73) Titulaire: SWM Luxembourg, 5326 Contern (LU)
(72) Inventeur: BALCON, Olivier, 72700 SPAY (FR); LE PANSE, Sebastien, 72700 SPAY (FR); LEON, Romuald, 72700 SPAY (FR); HERVE, Raoul, 72700 SPAY (FR)
(74) Mandataire: Plasseraud IP
(86) Numéro de dépôt international: PCT/EP2020/083797
(87) Numéro de publication internationale: WO 2021/105475

(56) Documents cités:
- FR-A1- 2 814 340
- FR-B1- 2 814 340
- NL-A- 9 400 191
- US-A1- 2011 030 710
- US-A1- 2014 144 454

## Description

### Domaine technique

L'invention concerne les feuilles de papier pour cigarette à rouler (Roll-your-own (RYO) cigarette selon la terminologie anglaise).

### Technique antérieure

Les feuilles de papier pour cigarette à rouler présentent une forme générale rectangulaire sur laquelle est appliquée une bande adhésive dont le grammage est de 8-10 g/m². Ces feuilles sont vendues sous la forme de carnet pouvant comprendre une centaine de feuilles. Pour fabriquer une cigarette, l'utilisateur sort une feuille de son carnet, met du tabac sur la feuille, puis forme la cigarette en mouillant la bande adhésive et en la superposant sur la feuille.

Classiquement, les feuilles de papier pour cigarette à rouler sont fabriquées à partir de bandes de papier pour cigarette à rouler découpées en bobines de papiers pour cigarette à rouler, la largeur des bobines étant sensiblement égale à la largeur des feuilles. Une bande adhésive est ensuite appliquée sur un des deux bords longs de la bobine de papier pour cigarette à rouler dans le sens machine, puis la bobine est séchée. La bobine séchée est ensuite découpée en feuilles de papier pour cigarette à rouler.

Le papier pour cigarette à rouler présente un grammage très faible, qui peut donc facilement se déchirer lors de la fabrication de la feuille. L'une des étapes les plus problématiques est celle de l'application de la bande adhésive sur la bobine. En effet, cette étape est classiquement réalisée à l'aide de buses sous pression qui peuvent facilement déchirer la bobine. Ceci est d'autant plus vrai que la largeur de la bobine est inférieure à 10 cm. De plus, la bande adhésive est déposée le long d'un des bords longs de la bobine, une partie de la bande adhésive peut donc être déposée en dehors de la bobine de sorte que de la matière est perdue et la quantité de bande adhésive ne soit pas suffisante pour qu'une cigarette soit formée.

A cause de ces problèmes, les procédés classiques de production du papier pour cigarette à rouler doivent être régulièrement stoppés. De plus la vitesse de défilement du papier dans ces procédés est de l'ordre de 55 m/min, elle peut donc être optimisée. FR 2 814 340 A1, NL 9 400 191 A, US 2014/144454 A1 et US 2011/030710 A1 divulguent des procédés connus de production de papier pour cigarette, ainsi que les produits en résultant.

Pour toutes ces raisons, la productivité de ces procédés n'est pas optimale.

### Problème technique

Il existe donc un besoin d'une solution efficace pour améliorer la productivité du procédé de fabrication des feuilles de papier pour cigarette à rouler.

Il est ainsi du mérite des inventeurs d'avoir trouvé qu'il était possible de répondre à ce besoin en appliquant une bande adhésive activable par humidité sur une bande ou une bobine de papier pour cigarette à rouler par flexographie, héliogravure ou flexogravure indirecte.

### Résumé

Ainsi un premier aspect de l'invention est un procédé de fabrication d'une bobine de papier pour cigarette à rouler comprenant une bande adhésive activable par humidité le long d'un de ces bords longs, le procédé comprenant les étapes suivantes :
a) découpage d'une bande de papier pour cigarette à rouler pour obtenir une bobine de papier pour cigarette à rouler,
b) application d'une bande adhésive activable par humidité pour obtenir la bobine de papier pour cigarette à rouler comprenant une bande adhésive activable par humidité le long d'un de ces bords longs,
l'étape b) d'application étant réalisée avant ou après l'étape a) de découpe, caractérisé en ce que l'étape b) d'application est réalisé par flexographie, héliogravure ou flexogravure indirecte, si besoin suivi d'un séchage.

Contrairement aux procédés classiques mettant en oeuvre des buses sous pression, la flexographie, l'héliogravure et la flexogravure indirecte, en particulier la flexographie, sont des méthodes douces qui permettent de diminuer fortement le risque de déchirure de la bande de papier pour cigarette à rouler lors de la réalisation de l'étape b) d'application. Ainsi, il n'est pas nécessaire de stopper régulièrement le procédé de fabrication d'une bobine de papier pour cigarette à rouler de l'invention.

De plus, la flexographie permet de contrôler très précisément la netteté des contours de la bande adhésive activable par humidité. Ainsi, lorsque l'étape a) de découpage est réalisée après l'étape b) d'application, alors les risques de déchirure lors de l'étape a) de découpage sont avantageusement minimisés. Il est également possible de découper plus précisément la bobine et ainsi d'optimiser la découpe pour minimiser les pertes de matière.

La flexographie, l'héliogravure et la flexogravure indirecte, en particulier la flexographie, permettent également d'avoir une vitesse de défilement du papier qui peut être quatre fois plus élevée que la vitesse des procédés classiques.

Pour toutes ces raisons, la productivité du procédé de fabrication d'une feuille de papier pour cigarette à rouler de l'invention est supérieure à la productivité des procédés classiques de fabrication d'une feuille de papier pour cigarette à rouler.

Un autre aspect de l'invention est un procédé de fabrication d'une feuille de papier pour cigarette à rouler comprenant une étape c) de découpage d'une bobine de papier pour cigarette à rouler fabriquée par le procédé de fabrication d'une bobine de papier pour cigarette à rouler de l'invention.

Un autre aspect de l'invention est un procédé de fabrication d'un carnet de feuilles de papier pour cigarette à rouler comprenant une étape d2) de formation d'une pile de bobines de papier pour cigarette à rouler fabriquées par le procédé de fabrication d'une bobine de papier pour cigarette à rouler de l'invention suivie d'une étape e) de découpage de la pile de bobines.

Les procédés de l'invention permettent de produire avantageusement un papier, sous forme de bobine ou de feuille, pour cigarette à rouler comprenant une bande adhésive activable par humidité avec une productivité plus élevée que la productivité des procédés classiques.

De plus, la bande activable par humidité du papier, sous forme bobine ou de feuille, présente un grammage inférieur à 8 g/m², *i.e.* le grammage de la bande adhésive d'une feuille de papier pour cigarette à rouler classique.

Ainsi un autre aspect de l'invention est un papier pour cigarette à rouler, sous forme de bobine ou de feuille, tel que défini dans la revendication 9 et comprenant une bande adhésive activable par humidité, caractérisé en ce que le grammage de la bande adhésive activable par humidité est inférieur 8 g/m², en particulier entre 4 g/m² et 7,5 g/m², tout particulièrement entre 5 g/m² et 7 g/m².

Bien que la bande adhésive du papier pour cigarette à rouler de l'invention présente un grammage inférieur à 8 g/m², elle présente, de façon inattendue, une adhésivité du même ordre de grandeur que l'adhésivité de la bande adhésive d'un papier pour cigarette à rouler classique.

Le papier pour cigarette à rouler de l'invention peut donc être utilisé pour fabriquer des cigarettes tout en étant avantageusement moins cher à produire qu'un papier classique car il requière moins d'adhésif activable par humidité.

Un autre aspect de l'invention est un carnet de feuilles de papier pour cigarette à rouler de l'invention.

Un autre aspect de l'invention est une cigarette comprenant une feuille de papier pour cigarette à rouler de l'invention.

### Description détaillée de l'invention

Selon un premier aspect, l'invention est un procédé de fabrication d'une bobine de papier pour cigarette à rouler comprenant une bande adhésive activable par humidité le long d'un de ces bords longs, le procédé comprenant les étapes suivantes :
a) découpage d'une bande de papier pour cigarette à rouler pour obtenir la bobine de papier pour cigarette à rouler,
b) application d'une bande adhésive activable par humidité pour obtenir une bobine de papier pour cigarette à rouler comprenant une bande adhésive activable par humidité le long d'un de ces bords longs,
l'étape b) d'application étant réalisée avant ou après l'étape a) de découpe, caractérisé en ce que l'étape b) d'application est réalisé par flexographie, héliogravure ou flexogravure indirecte, si besoin suivi d'un séchage.

Au sens de la présente invention, on entend par "papier pour cigarette à rouler" un papier utilisé pour rouler des cigarettes. Il peut être fabriqué à partir de pâte de bois, de fibres de tabac, de fibres de chanvre, de fibres de lin, de fibres de sisal, de fibres de la coque protégeant la fève de cacao, des fibres de cannabis, de paille de riz, de fibres de sparte et leurs mélanges. Le papier pour cigarette à rouler présente un grammage plus faible et est plus fin que le papier des cigarettes commercialisées roulées. Par exemple, le grammage du papier à rouler, mesuré en dehors de la bande adhésive, peut être compris entre 10 g/m² et 50 g/m², en particulier entre 12 g/m² et 25 g/m², plus particulièrement entre 13 g/m² et 15 g/m². L'épaisseur du papier à rouler peut être comprise entre 5 micromètres et 100 micromètres, en particulier entre 10 micromètres et 60 micromètres, plus particulièrement entre 20 micromètres et 50 micromètres.

Au sens de la présente invention, on entend par "bande de papier pour cigarette à rouler", un papier pour cigarette à rouler tel que décrit ci-dessus dont la forme générale, une fois la bande déroulée, est un rectangle. Typiquement la longueur du rectangle est de plusieurs dizaines mètres, voire de plusieurs milliers de mètres, tandis que sa largeur est supérieure ou égale à 0,6 m, en particulier supérieure ou égale à 1 m, plus particulièrement supérieure ou égale à 1,2 m, plus particulièrement encore supérieure ou égale à 1,5 m.

Au sens de la présente invention, on entend par "bobine de papier pour cigarette à rouler", un papier pour cigarette à rouler tel que décrit ci-dessus dont la forme générale, une fois la bobine déroulée, est un rectangle et qui peut comprendre une bande adhésive activable par humidité le long d'un des bords longs du rectangle. La largeur du rectangle est sensiblement égale à la largeur des feuilles de papier pour cigarette à rouler, *i.e.* entre 30 mm et 75 mm, en particulier environ 36 mm, environ 44 mm ou environ 53 mm. Typiquement la longueur du rectangle est de plusieurs centaines à plusieurs milliers de mètres, par exemple entre 1000 m et 15000 m, en particulier entre 3000 m et 10000 m, tout particulièrement entre 5000 m à 8000 m. La longueur du rectangle peut aussi être d'une ou plusieurs dizaines de mètres, dans ce cas la feuille est appelée rouleau. La longueur du rectangle peut aussi être de un ou plusieurs mètres, dans ce cas la feuille est appelée rame.

La bande adhésive activable par humidité (notée aussi bande adhésive) comprend un adhésif activable par humidité.

Au sens de la présente invention, on entend par "adhésif activable par humidité" un composé qui présente une propriété adhésive au contact de l'eau ou de l'humidité, comme par exemple la salive. L'adhésif activable par humidité peut être tout type d'adhésif activable par humidité connu de l'homme du métier. Par exemple l'adhésif activable par humidité peut être choisi parmi les solutions de sucre, les polysaccharides modifiés ou non, les gommes, et leurs mélanges, en particulier les gommes.

A titre de polysaccharides modifiés ou non on peut citer l'amidon, les alginates, les dextrines, les cyclodextrines ou leurs mélanges.

Les gommes peuvent être naturelles ou artificielles. Des exemples de gommes naturelles sont la gomme d'acacia, la gomme arabique, la gomme de guar, la gomme de Karaya, les pectines et leurs mélanges, en particulier la gomme de guar, la gomme arabique et leur mélange, plus particulièrement la gomme arabique.

La concentration massique en adhésif activable par humidité dans la bande adhésive de la bobine de papier pour cigarette à rouler, sans tenir compte du papier pour cigarette à rouler, peut par exemple être d'au moins 95%, en particulier au moins 97%, plus particulièrement au moins 99%, plus particulièrement encore de 100%.

La bande adhésive peut également comprendre un additif pour conférer une propriété autre que l'adhésivité à la bande adhésive.

Par exemple, l'additif peut être un plastifiant, un antimousse, un colorant, un composé aromatique, ou leurs mélanges, en particulier un plastifiant, un antimousse ou leur mélange.

Le sorbitol est un exemple de plastifiant qui peut être utilisé dans le cadre de la présente invention.

A tire de colorant, on peut citer des colorants alimentaires naturel ou artificiel, en particulier des colorants alimentaires naturels. Les caramels, la chlorophylline, le colorant issu du paprika, le colorant issu de la betterave, le carotène, le colorant issu du curcuma, la cochenille, le colorant issue de la graine d'annatto, la lutéine, le colorant issu du tournesol, les anthocyanines, le colorant issu du malte, le charbon et les pigments thermoluminescents sont des exemples de colorant alimentaires naturels.

Le composé aromatique peut être choisi parmi les arômes modifiés glycosilés, les arômes encapsulés (cyclodextrines, membranes ou matrices), les arômes naturels et leurs mélanges. Le composé aromatique peut en particulier être choisi parmi EVG, Emanates, Cannabidiol (CBD) de synthèse ou naturel, tétrahydrocannabinol (THC) de synthèse ou naturel, les terpènes et leurs mélanges.

Typiquement, le grammage de la bande adhésive, en dehors du papier pour cigarette à rouler, est inférieur à 8 g/m², en particulier entre 5,5 g/m² et 7,5 g/m², plus particulièrement entre 5 g/m² et 6,5 g/m²

Le grammage de la bande adhésive est déterminé en pesant la masse de 1 m² d'une zone de la bobine de papier dépourvue de bande adhésive, en pesant la masse de 1 m² d'une zone de la bobine de papier comprenant de la bande adhésive et en soustrayant les deux masses.

Ces valeurs de grammage peuvent être atteintes par la flexographie, l'héliogravure ou la flexogravure indirecte, en particulier par la flexographie.

La bobine fabriquée par le procédé de l'invention est donc moins chère qu'une bobine fabriquée par un procédé de l'art antérieur car nécessite des quantités moindre d'adhésif activable par humidité.

De plus, et de manière inattendue, les inventeurs ont remarqué que la bande adhésive de la bobine fabriquée par le procédé de l'invention présente une adhésivité du même ordre de grandeur que l'adhésivité des bandes adhésives des bobines fabriquées par les procédés de l'art antérieur.

Typiquement, la largueur de la bande adhésive est comprise entre 1 mm à 10 mm, en particulier entre 4 mm et 8 mm, plus particulièrement entre 5 mm et 7 mm.

La bande adhésive peut avoir une forme continue ou discontinue.

A titre de forme de forme continue, on peut citer une droite, un motif en zigzag, un motif en créneau ou un motif de vague.

Des exemples de forme discontinue sont une ligne discontinue de formes géométriques, de logos ou leur mélange. La ligne peut être droite ou courbe.

Des exemples de forme géométrique sont un polygone, un cercle, une ellipse, un ovale et leurs mélanges. Le polygone peut être un triangle, un quadrilatère tel qu'un carré, un rectangle, ou un losange, un pentagone, un hexagone, un octogone.

Le logo peut être un logo d'un fabricant de papier pour cigarette à rouler.

L'étape a) de découpage de la bande de papier pour cigarette à rouler est une étape classique connue de l'homme du métier. L'étape a) de découpage permet d'obtenir une ou plusieurs bobines, par exemple de 2 à 100 bobines, en particulier de 30 à 55 bobines.

L'étape a) de découpage peut, par exemple, être réalisée à une vitesse de défilement du papier supérieure ou égale à 100 m/min, en particulier supérieure ou égale à 500 m/min, plus particulièrement supérieure ou égale à 750 /min, plus particulièrement encore supérieure ou égale à 1000 m/min.

Selon un mode de réalisation, l'étape b) d'application est réalisée après l'étape a) de découpage. Dans ce cas l'étape b) est réalisée sur au moins une bobine de papier pour cigarette à rouler issue de l'étape a).

Selon un mode de réalisation alternatif, l'étape b) d'application est réalisée avant l'étape a) de découpage. Dans ce cas l'étape b) est réalisée sur la bande de papier pour cigarette à rouler pour obtenir une bande de papier adhésive, puis la bande de papier adhésive est découpée pendant l'étape a) pour obtenir la bobine.

Grâce à ce mode de réalisation alternatif, il est possible d'appliquer plusieurs bandes adhésives sur une bande de papier pour cigarette à rouler puis découper la bande de papier adhésive pour obtenir plusieurs bobines de papier.

Ainsi, un mode réalisation particulier de l'invention est un procédé de fabrication de n bobines de papier pour cigarette à rouler, chaque bobine de papier pour cigarette à rouler comprenant une bande adhésive le long d'un de ces bords longs, le procédé comprenant les étapes suivantes :
b) application de n bandes adhésives sur une bande de papier pour cigarette à rouler pour obtenir une bande de papier adhésive, chacune des *n* bandes adhésives s'étendant dans le sens machine, et
a) découpage de la bande de papier adhésive dans le sens machine le long de n-1 bandes adhésives pour obtenir les n bobines de papier pour cigarette à rouler, n étant un nombre entier supérieur ou égal à 2,
caractérisé en ce que l'étape b) d'application est réalisé par flexographie, héliogravure ou flexogravure indirecte, si besoin suivi d'un séchage.

Ce procédé est particulièrement efficace car il est plus efficace d'appliquer les n bandes adhésives sur une bande de papier pour cigarette à rouler puis de découper ladite bande de papier pour cigarette à rouler en n bobines de papier pour cigarette à rouler que de découper une bande de papier pour cigarette à rouler en n bobines de papier pour cigarette à rouler et d'appliquer une unique bande sur chacune des n bobines de papier pour cigarette à rouler.

Selon un mode de réalisation, n est un nombre entier inférieur à 100, en particulier compris entre 30 et 55.

L'étape b) d'application peut, par exemple, être réalisée à une vitesse de défilement du papier supérieure ou égale à 70 m/min, en particulier supérieure ou égale à 100 m/min, plus particulièrement supérieure ou égale à 150 m/min, plus particulièrement encore supérieure ou égale à 200 m/min.

Selon un mode de réalisation particulier, l'étape b) d'application est réalisée par flexographie, suivie si besoin d'un séchage.

La flexographie est un procédé d'impression en relief connu de l'homme du métier dans lequel une plaque souple en relief, appelée cliché, est imprégnée d'une solution d'impression, le substrat et le cliché imprégné sont mis en contact pour que la solution d'impression soit appliquée sur le substrat.

Dans le cadre de la présente invention, la flexographie permet avantageusement la mise en contact d'un cliché imprégné d'une solution d'adhésif activable par humidité et de la bande de papier pour cigarette à rouler pour permettre l'application des n bandes d'adhésives sur la bande de papier pour cigarette à rouler.

La flexographie permet également d'avoir une vitesse de défilement du papier qui peut être quatre fois plus élevée que la vitesse des procédés classiques. Ainsi, la productivité du procédé de fabrication d'une bobine de papier pour cigarette à rouler de l'invention est donc supérieure aux procédés classiques.

Un des avantages de la flexographie est le contrôle très précis de la netteté des contours de la bande adhésive. Ainsi les risques de déchirure lors de l'étape a) de découpage de la bande de papier adhésive pour fabriquer une bobine pour cigarette à rouler comprenant une bande adhésive le long d'un de ces bords longs sont avantageusement minimisés. Il est également possible de découper plus précisément la bande et ainsi d'optimiser la découpe pour minimiser les pertes de matière. Par conséquent, la productivité du procédé de fabrication d'une bobine de papier pour cigarette à rouler de l'invention mettant en oeuvre une étape b) d'application réalisée par flexographie est supérieure à la productivité des procédés classiques.

Parmi les autres avantages offerts par la flexographie, on peut citer la simplicité et le faible coût de revient des clichés.

En outre, la flexographie est une méthode flexible qui permet d'obtenir une bande adhésive dont la forme dépend de la forme du cliché.

De plus, la résistance à la traction dans le sens machine et dans le sens transverse des bobines fabriquées après une étape a) d'application réalisée par flexographe est supérieure à celle des bobines fabriquées par un procédé classique. Les bobines fabriquées après une étape a) d'application réalisée par flexographe peuvent donc plus facilement être mise en oeuvre dans des étapes ultérieures au procédé de fabrication des bobines de l'invention, comme par exemple un étape de découpage de la bobine en feuille ou une étape de formation d'une pile de bobines suivie d'une étape de découpage de la pile en pile de feuille.

La flexographie, l'héliogravure et la flexogravure indirecte peuvent mettre en oeuvre une solution d'adhésif.

La solution d'adhésif activable par humidité (également notée solution d'adhésif) comprend un adhésif activable par humidité. La concentration massique en adhésif activable par humidité dans la solution d'adhésif peut être comprise entre 30% et 60%, en particulier entre 32% et 45%, plus particulièrement entre 35% et 40%.

La solution d'adhésif est typiquement une solution aqueuse. La solution d'adhésif activable par humidité peut également comprendre un additif tel que décrit ci-dessus.

Selon un mode de réalisation particulier, la solution d'adhésif peut comprendre un adhésif activable par humidité, un plastifiant, et un antimousse, et la concentration massique en adhésif activable par humidité est de 30% à 50%, la concentration massique en plastifiant est de 0,1% à 0,5% et la concentration massique en antimousse est de 0,5% à 1%.

L'étape éventuelle de séchage est une étape de séchage classique connue de l'homme du métier. Ce dernier saura donc l'adapter au procédé de fabrication d'une bobine de papier pour cigarette à rouler de l'invention.

Comme expliqué ci-dessus, l'adhésivité de la bande adhésive de la bobine fabriquée par le procédé de l'invention est du même ordre de grandeur que l'adhésivité des bandes adhésives des bobines fabriquées par les procédés de l'art antérieur. Une bobine fabriquée par le procédé de l'invention peut donc être découpé en feuille de papier pour cigarette à rouler qui sera ensuite utilisée pour former une cigarette à rouler.

Un autre aspect de l'invention est donc un procédé de fabrication d'une feuille de papier pour cigarette à rouler comprenant une étape c) de découpage d'une bobine de papier pour cigarette à rouler fabriquée par le procédé de fabrication d'une bobine de papier pour cigarette à rouler de l'invention pour fabriquer une feuille de papier pour cigarette à rouler.

Au sens de l'invention, on entend par "feuille de papier pour cigarette à rouler" un papier pour cigarette à rouler tel que décrit ci-dessus dont la forme générale est un rectangle et qui comprend une bande adhésive telle que décrite ci-dessus le long d'un des bords longs du rectangle. Typiquement, la longueur du rectangle est comprise entre 70 mm et 110 mm tandis que sa largeur peut varier de 30 mm à 75 mm.

L'étape c) de découpage de la bobine de papier pour cigarette à rouler est une étape de découpage classique connue de l'homme du métier. Ce dernier saura donc l'adapter au procédé de fabrication d'une feuille de papier pour cigarette à rouler de l'invention.

La feuille de papier pour cigarette à rouler fabriquée par le procédé de l'invention est classiquement vendue sous forme de carnet.

L'invention porte donc également sur un procédé de fabrication d'un carnet de feuilles de papier pour cigarette à rouler comprenant une étape d1) de formation d'une pile de feuilles de papier pour cigarette à rouler fabriquées par le procédé de fabrication d'une feuille de papier pour cigarette à rouler de l'invention.

L'étape d1) de formation peut par exemple être réalisée en empilant les feuilles de papier pour cigarette à rouler les unes sur les autres ou en intercalant une feuille de papier pour cigarette à rouler entre 2 feuilles de papier pour cigarette à rouler.

Par exemple, l'étape d1) de formation peut être réalise en intercalant les feuilles à l'aide de l'équipement commercialisé par IMAtec au Luxembourg.

Selon un mode de réalisation, la pile de feuilles formée après l'étape d1) peut subir une étape d'enchevêtrage pour former une pile de feuilles enchevêtrées.

La pile de feuilles, enchevêtrées ou non, peut ensuite être introduite dans un étui.

L'invention porte donc également sur un procédé de fabrication d'un carnet de feuilles de papier pour cigarette à rouler comprenant une étape d2) de formation d'une pile de bobines de papier pour cigarette à rouler fabriquées par le procédé de fabrication d'une bobine de papier pour cigarette à rouler de l'invention suivie d'une étape e) de découpage de la pile de bobines.

La pile de bobines peut être formée lors de l'étape d2) en déroulant les bobines de papier pour cigarette à rouler et en empilant les bobines de papier pour cigarette à rouler déroulées les unes sur les autres ou en intercalant une bobine de papier pour cigarette à rouler déroulée entre deux bobines de papier pour cigarette à rouler déroulées.

Selon un mode de réalisation, la pile de feuilles formée à l'étape e) de découpage de la pile de bobines peut subir une étape d'enchevêtrage pour former une pile de feuilles enchevêtrées.

Selon un mode de réalisation, la pile de bobines formée à l'étape d2) peut subir une étape d'enchevêtrage avant l'étape de découpage pour former une pile de feuilles enchevêtrées.

La pile de feuilles, enchevêtrées ou non, peut ensuite être introduite dans un étui.

Comme expliqué précédemment, le papier pour cigarette à rouler, sous forme de bobine ou de feuille, comprend une bande adhésive dont le grammage est avantageusement inférieur au grammage conventionnel de 8-9 g/m².

Ainsi, l'invention porte également sur un papier pour cigarette à rouler, sous forme de bobine ou de feuille, comprenant une bande adhésive telle que décrite ci-dessus en lien avec le procédé de fabrication d'une bobine de papier pour cigarette à rouler de l'invention.

De façon avantageuse, le papier pour cigarette à rouler de l'invention est moins cher qu'un papier pour cigarette à rouler fabriquée par un procédé de l'art antérieur car il nécessite moins d'adhésif activable par humidité.

De plus, et de manière inattendue, les inventeurs ont remarqué que la bande adhésive du papier pour cigarette à rouler de l'invention présente une adhésivité du même ordre de grandeur que l'adhésivité des bandes adhésives des papiers pour cigarette à rouler fabriqués par les procédés de l'art antérieur.

Le papier pour cigarette à rouler et la bande adhésive du papier pour cigarette à rouler sont tels que décrits ci-dessus en lien avec le procédé de fabrication d'une bobine de papier pour cigarette à rouler de l'invention.

Selon un mode de réalisation, le papier pour cigarette à rouler sous forme de bobine est susceptible d'être obtenu par le procédé de fabrication d'une bobine de papier pour cigarette à rouler décrit ci-dessus.

Selon un mode de réalisation, le papier pour cigarette à rouler sous forme de feuille est susceptible d'être obtenu par le procédé de fabrication d'une feuille de papier pour cigarette à rouler décrit ci-dessus.

Le papier pour cigarette à rouler sous forme de feuille peut être vendu en carnet.

L'invention porte donc également sur un carnet de papiers pour cigarette à rouler sous forme de feuille tels que décrit ci-dessus. Ce carnet est susceptible d'être obtenu par le procédé de fabrication d'un carnet de feuilles de papier pour cigarette à rouler décrit ci-dessus.

Le papier pour cigarette à rouler sous forme de feuille peut par exemple être utilisé pour former une cigarette. L'invention porte donc également sur une cigarette comprenant le papier pour cigarette à rouler sous forme de feuille.

### Exemple

### Exemple 1 selon l'invention

Une solution aqueuse de gomme arabique (teneur en gomme arabique de 38% massique) est appliquée par flexographie avec quatre clichés sur une bande de papier pour cigarette à rouler avançant à une vitesse de 220 m/min. La bande est ensuite séchée à puis découpée pour obtenir 4 bobines, chaque bobine comprenant une bande adhésive comprenant de la gomme arabique dont le grammage est de 6 g/m².

La bobine est ensuite découpée en feuilles.

Chaque feuille présente une forme rectangulaire de longueur 110 mm, de largeur 44 mm et une bande adhésive continue le long d'un des deux bords long de la feuille et dont le grammage est de 6 g/m².

### Exemple 2 comparatif

Une bande de papier pour cigarette à rouler est découpé en bobines. Une solution aqueuse de gomme arabique (teneur en gomme arabique de 45% massique) est appliquée par une buse sur une bobine de papier pour cigarette à rouler avançant à une vitesse de 55 m/min. La bobine est ensuite séchée à pour obtenir une bobine avec une bande adhésive comprenant de la gomme arabique dont le grammage est de 8 g/m².

La bobine est ensuite découpée en feuilles.

Chaque feuille présente une forme rectangulaire de longueur 110 mm, de largeur 44 mm et une bande adhésive continue le long d'un des deux bords long de la feuille et dont le grammage est de 8 g/m²

### Comparaison du procédé de l'Exemple 1 selon l'invention, et du procédé de l'Exemple 2 (comparative).

Le procédé de fabrication de la feuille de l'Exemple 1 (selon l'invention) est 4 fois plus rapide que le procédé de fabrication de la feuille de l'Exemple 2 (comparatif), requière moins de gomme arabique et permet de fabriquer une feuille comprenant bande adhésive continue dont le grammage est de 6 g/m², contre 8 g/m² soit une réduction de 15%.

La productivité du procédé de l'Exemple 1 est donc supérieure à la productivité du procédé de l'Exemple 2.

### Exemple 3 - Test de l'adhésivité

10 feuilles selon l'invention (fabriquées par le procédé de l'Exemple 1) sont collées ensemble après humidification de la bande adhésive. Après séchage naturel, le décollement des feuilles est testé en tirant sur les feuilles.
8 feuilles sur 10 ne se décollent pas.

10 feuilles comparatives (fabriquées par le procédé de l'Exemple 2) sont collées ensemble après humidification de la bande adhésive. Après séchage naturel, le décollement des feuilles est testé en tirant sur les feuilles.
9 feuilles sur 10 ne se décollent pas.

Ce test met en avant que les feuilles selon l'invention, dont la bande adhésive comprend 15% gomme arabique en moins que la bande adhésive des feuilles comparative, présentent une adhésivité du même ordre de grandeur que les feuilles comparatives.

## Revendications

1. Procédé de fabrication d'une bobine de papier pour cigarette à rouler comprenant une bande adhésive activable par humidité le long d'un de ces bords longs, le procédé comprenant les étapes suivantes :
a) découpage d'une bande de papier pour cigarette à rouler pour obtenir une bobine de papier pour cigarette à rouler,
b) application d'une bande adhésive activable par humidité pour obtenir la bobine de papier pour cigarette à rouler comprenant une bande adhésive activable par humidité le long d'un de ces bords longs,
l'étape b) d'application étant réalisée avant ou après l'étape a) de découpe, **caractérisé en ce que** l'étape b) d'application est réalisé par flexographie, héliogravure ou flexogravure indirecte.

2. Procédé selon la revendication 1 dans lequel l'adhésif activable par humidité est choisi parmi les solutions de sucre, les polysaccharides, l'amidon et les gommes et leurs mélanges.

3. Procédé selon la revendication 1 ou la revendication 2 dans lequel le grammage de la bande adhésive activable par humidité est inférieur à 8 g/m².

4. Procédé selon l'une quelconque des revendications 1 à 3 dans lequel la concentration massique en adhésif activable par humidité dans la bande adhésive activable par humidité est d'au moins 95%, en particulier au moins 97%, tout particulièrement au moins 99%, plus particulièrement encore de 100%.

5. Procédé selon l'une quelconque des revendications 1 à 4 dans lequel la bande adhésive activable par humidité comprend un additif choisi parmi un plastifiant, un antimousse, un colorant, un composé aromatique et leurs mélanges.

6. Procédé de fabrication d'une feuille de papier pour cigarette à rouler comprenant une étape c) de découpe d'au moins une bobine de papier pour cigarette à rouler fabriquée par le procédé tel que défini dans l'une quelconque des revendications 1 à 5 pour fabriquer une feuille de papier pour cigarette à rouler.
Réponse à la communication selon les règles 161 (1) et 162 CBE

7. Procédé de fabrication d'un carnet de feuilles de papier pour cigarette à rouler comprenant une étape d1) de formation d'une pile de feuilles de papier pour cigarette à rouler fabriquées par le procédé tel que défini dans la revendication 6.

8. Procédé de fabrication d'un carnet de feuilles de papier pour cigarette à rouler comprenant une étape d2) de formation d'une pile de bobines de papier pour cigarette à rouler fabriquées par le procédé tel que défini dans l'une quelconque des revendications 1 à 5 suivie d'une étape e) de découpage de la pile de bobines pour former une pile de feuille.

9. Papier pour cigarette à rouler, sous forme de bobine ou de feuille, comprenant une bande adhésive activable par humidité,
dans lequel la bande adhésive activable par humidité est comprise le long d'un des bords longs du papier pour cigarette à rouler, dans lequel l'adhésif activable par humidité de la bande adhésive activable par humidité est choisi parmi les solutions de sucre, les polysaccharides, l'amidon et les gommes, et leurs mélanges, et
**caractérisé en ce que**
le grammage de la bande adhésive activable par humidité est inférieur à 8 g/ m² et la concentration massique en adhésif activable par humidité dans la bande adhésive activable par humidité est d'au moins 97%.

10. Papier pour cigarette à rouler selon la revendication 9 dans lequel la concentration massique en adhésif activable par humidité dans la bande adhésive activable par humidité est d'au moins 99%, plus particulièrement encore de 100%.

11. Papier pour cigarette à rouler selon l'une quelconque des revendications 9 à 10 dans lequel la bande adhésive activable par humidité Réponse à la communication selon les règles 161(1) et 162 CBE comprend un additif choisi parmi un plastifiant, un antimousse, un colorant, un composé aromatique et leurs mélanges

12. Carnet de papiers pour cigarette à rouler sous forme de feuille tels que définis selon l'une quelconque des revendications 9 à 11.

13. 4* Cigarette comprenant le papier pour cigarette à rouler sous forme de feuille tel que défini selon l'une quelconque des revendications 9 à 11.

## Patentansprüche

1. Verfahren zur Herstellung einer Papierrolle für selbstgedrehte Zigaretten, die einen feuchtigkeitsaktivierbaren Klebestreifen entlang einer ihrer langen Kanten umfasst, wobei das Verfahren die folgenden Schritte umfasst:
a. Schneiden einer Papierbahn für selbstgedrehte Zigaretten, um eine Papierrolle für selbstgedrehte Zigaretten zu erhalten,
b. Aufbringen eines feuchtigkeitsaktivierbaren Klebestreifens, um die Papierrolle für selbstgedrehte Zigaretten zu erhalten, die einen feuchtigkeitsaktivierbaren Klebestreifen entlang einer der langen Kanten umfasst, wobei der Schritt b) des Aufbringens vor oder nach dem Schritt a) des Schneidens durchgeführt wird, **dadurch gekennzeichnet, dass** der Schritt b) des Aufbringens durch Flexodruck, Tiefdruck oder indirekten Flexodruck durchgeführt wird.

2. Verfahren nach Anspruch 1, wobei der feuchtigkeitsaktivierbare Klebstoff gewählt ist aus Zuckerlösungen, Polysacchariden, Stärke und Gummis und deren Mischungen.

3. Verfahren nach Anspruch 1 oder 2, wobei das Flächengewicht des feuchtigkeitsaktivierbaren Klebestreifens weniger als 8 g/m² beträgt.

4. Verfahren nach einem der Ansprüche 1 bis 3, wobei die Massenkonzentration des feuchtigkeitsaktivierbaren Klebstoffs in dem feuchtigkeitsaktivierbaren Klebeband wenigstens 95 %, insbesondere wenigstens 97 %, besonders bevorzugt wenigstens 99 %, stärker bevorzugt 100 %, beträgt.

5. Verfahren nach einem der Ansprüche 1 bis 4, wobei das feuchtigkeitsaktivierbare Klebeband ein Additiv umfasst, das aus einem Weichmacher, einem Entschäumer, einem Farbstoff, einer aromatischen Verbindung und deren Mischungen gewählt ist.

6. Verfahren zur Herstellung eines Papierblatts für selbstgedrehte Zigaretten, umfassend einen Schritt c) des Schneidens von wenigstens einer Papierrolle für selbstgedrehte Zigaretten, die mittels des Verfahrens nach einem der Ansprüche 1 bis 5 hergestellt wurde, um ein Papierblatt für selbstgedrehte Zigaretten herzustellen.

7. Verfahren zur Herstellung eines Heftchens mit Papierblättern für selbstgedrehte Zigaretten, umfassend einen Schritt d1) zur Bildung eines Stapels von Papierblättern für selbstgedrehte Zigaretten, die mittels des Verfahrens nach Anspruch 6 hergestellt wurden.

8. Verfahren zur Herstellung eines Heftchens mit Papierblättern für selbstgedrehte Zigaretten, umfassend einen Schritt d2) des Bildens eines Stapels von Rollen Papier für selbstgedrehte Zigaretten, hergestellt mittels des Verfahrens nach einem der Ansprüche 1 bis 5, gefolgt von einem Schritt e) des Schneidens des Rollenstapels, um einen Blattstapel zu bilden.

9. Papier für selbstgedrehte Zigaretten in Rollen- oder Blattform, umfassend einen feuchtigkeitsaktivierbaren Klebestreifen, wobei der feuchtigkeitsaktivierbare Klebestreifen entlang einer der langen Kanten des Papiers für selbstgedrehte Zigaretten enthalten ist, wobei der feuchtigkeitsaktivierbare Klebstoff des feuchtigkeitsaktivierbaren Klebestreifens gewählt ist aus Zuckerlösungen, Polysacchariden, Stärke und Gummis und deren Mischungen, und **dadurch gekennzeichnet, dass** das Flächengewicht des feuchtigkeitsaktivierbaren Klebestreifens weniger als 8 g/m² beträgt, und die Massenkonzentration des feuchtigkeitsaktivierbaren Klebstoffs in dem feuchtigkeitsaktivierbaren Klebestreifen wenigstens 97 % beträgt.

10. Papier für selbstgedrehte Zigaretten nach Anspruch 9, wobei die Massenkonzentration des feuchtigkeitsaktivierbaren Klebstoffs in dem feuchtigkeitsaktivierbaren Klebestreifen wenigstens 99 %, besonders bevorzugt 100 % beträgt.

11. Papier für selbstgedrehte Zigaretten nach einem der Ansprüche 9 bis 10, wobei der feuchtigkeitsaktivierbare Klebestreifen einen Zusatzstoff enthält, der aus einem Weichmacher, einem Entschäumer, einem Farbstoff, einer aromatischen Verbindung und deren Mischungen gewählt ist.

12. Heftchen mit Papieren für selbstgedrehte Zigaretten in Blattform nach einem der Ansprüche 9 bis 11.

13. Zigarette, die das blattförmige Zigarettenpapier für selbstgedrehte Zigaretten nach einem der Ansprüche 9 bis 11 umfasst.

## Claims

1. A method for manufacturing a roll of roll-your-own cigarette paper comprising a moisture-activable adhesive tape along one of its long edges, the method comprising the following steps:
a) cutting a tape of roll-your-own cigarette paper to obtain a roll of roll-your-own cigarette paper,
b) applying a moisture-activable adhesive tape to obtain the roll of roll-your-own cigarette paper comprising a moisture-activable adhesive tape along one of its long edges,
the application step b) being carried out before or after the cutting step a), **characterised in that** the application step b) is carried out by flexographic printing, rotogravure printing or indirect flexographic printing.

2. The method according to claim 1, wherein the moisture-activable adhesive is selected from among sugar solutions, polysaccharides, starch and gums and mixtures thereof.

3. The method according to claim 1 or claim 2, wherein the basis weight of the moisture-activable adhesive tape is lower than 8 g/m².

4. The method according to any one of claims 1 to 3, wherein the mass concentration of the moisture-activable adhesive in the moisture-activable adhesive tape is at least 95%, in particular at least 97%, quite particularly at least 99%, even more particularly 100%.

5. The method according to any one of claims 1 to 4, wherein the moisture-activable adhesive tape comprises an additive selected from among a plasticiser, an antifoam, a dye, an aromatic compound and mixtures thereof.

6. A method for manufacturing a sheet of roll-your-own cigarette paper comprising a step c) of cutting at least one roll-your-own cigarette paper roll manufactured by the method as defined in any one of claims 1 to 5 to manufacture a sheet of roll-your-own cigarette paper.

7. A method for manufacturing a booklet of sheets of roll-your-own cigarette paper comprising a step d1) of forming a stack of roll-your-own cigarette paper sheets manufactured by the method as defined in claim 6.

8. A method for manufacturing a booklet of sheets of roll-your-own cigarette paper comprising a step d2) of forming a stack of roll-your-own cigarette paper rolls manufactured by the method as defined in any one of claims 1 to 5 followed by a step e) of cutting the stack of rolls to form a stack of sheets.

9. A roll-your-own cigarette paper, in form of a roll or a sheet, comprising a moisture-activable adhesive tape,
wherein the moisture-activable adhesive tape is comprised along one of the long edges of the roll-your-own cigarette paper,
wherein the moisture-activable adhesive of the moisture-activable adhesive tape is selected from among sugar solutions, polysaccharides, starch and gums, and mixtures thereof, and
**characterised in that**
the basis weight of the moisture-activable adhesive tape is lower than 8 g/m²,
the mass concentration of moisture-activable adhesive in the moisture-activable adhesive tape is at least 97%.

10. The roll-your-own cigarette paper according to claim 9, wherein the mass concentration of the moisture-activable adhesive in the moisture-activable adhesive tape is at least 99%, even more particularly 100%.

11. The roll-your-own cigarette paper according to any one of claims 9 to 10, wherein the moisture-activable adhesive tape comprises an additive selected from among a plasticiser, an antifoam, a dye, an aromatic compound and mixtures thereof.

12. A booklet of roll-your-own cigarette papers in form of sheets as defined according to any one of claims 9 to 11.

13. A cigarette comprising the roll-your-own cigarette paper in form of sheet as defined according to any one of claims 9 to 11.
